Europäisches Patentamt

European Patent Office

Office européen des brevets

(19)

(11) Veröffentlichungsnummer : **0 148 464**
**B1**

(12)        **EUROPÄISCHE PATENTSCHRIFT**

(45) Veröffentlichungstag der Patentschrift :
23.03.88

(51) Int. Cl.⁴ : **A 47 J 27/092**

(21) Anmeldenummer : **84115645.8**

(22) Anmeldetag : **17.12.84**

---

(54) **Dampfdruckkochtopf.**

---

(30) Priorität : **07.01.84 DE 3400356**

(43) Veröffentlichungstag der Anmeldung :
**17.07.85 Patentblatt 85/29**

(45) Bekanntmachung des Hinweises auf die Patenterteilung : **23.03.88 Patentblatt 88/12**

(84) Benannte Vertragsstaaten :
**CH DE FR LI**

(56) Entgegenhaltungen :
**EP-A- 0 123 197**
**DE-A- 1 779 501**
**DE-A- 3 223 142**
**FR-A- 2 342 693**
**US-A- 2 565 964**
**US-A- 2 594 584**

(73) Patentinhaber : **Heinrich Baumgarten KG Spezialfabrik für Beschlagteile
Postfach 1620
D-5908 Neunkirchen (DE)**

(72) Erfinder : **Fischbach, Wolfgang
Heinrich-Heine-Strasse 4
D-5244 Daaden (DE)**

(74) Vertreter : **Patentanwälte Dipl.-Ing. R. Schlee Dipl.-
Ing. A. Missling
Bismarckstrasse 43
D-6300 Giessen (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft einen Dampfdruckkochtopf, bei dem Topf und Deckel durch einen bajonettartigen oder ähnlichen Verschluß miteinander verbunden sind, mit einem im Deckel angeordneten Koch- und Sicherheitsventil, bestehend aus einem mit dem Deckel verbundenen Ventilkörper und einem mittels einer Feder gegen einen Ventilsitz gepreßt gehaltenen Ventil und mit einer Verriegelungseinrichtung, die ein Drehen von Deckel und Topf und somit ein Öffnen desselben erst dann gestattet, wenn der Druck im Topf abgebaut ist, wobei die Verriegelungseinrichtung mit dem Ventil über ein starr mit der Verriegelungseinrichtung verbundenes Betätigungsglied miteinander verbunden ist, so daß bei einer Entriegelung von Deckel und Topf der Überdruck im Topf abgebaut wird.

Bei Dampfdruckkochtöpfen wird das zu garende Gut unter einem Überdruck im Innern des Dampfdruckkochtopfes gegart, so daß der Dampfdruckkochtopf mit einem Sicherheitsventil versehen sein muß, das bei einem bestimmten Überdruck Dampf abläßt und somit den Druck im Kochtopf erniedrigt.

Bekannt ist es, das Sicherheitsventil mit einem Kochventil zu kombinieren, wobei die das Ventil gegen seinen Ventilsitz pressende Federspannung zur Einstellung der verschiedenen Kochstufen variiert werden kann. Dieses Ventil arbeitet somit als Regelventil und hält den Druck im Kochtopf auf einen vorbestimmten Wert. Bekannt ist es ferner, ein derartiges Koch- und Sicherheitsventil zusätzlich mit einem Kochanzeiger zu versehen, d. h. einem Kolben, der entgegen einer Federkraft in Abhängigkeit des Druckes im Dampfdruckkochtopf angehoben wird und so mit seinen Markierungen die Höhe des Druckes im Dampfdruckkochtopf anzeigt.

Ein derartiger Dampfdruckkochtopf wird mit einem erhöhten Druck betrieben, was bedeutet, daß dafür Sorge getragen werden muß, daß der Dampfdruckkochtopf nicht unter Druck geöffnet werden kann. Diese Sicherung dient des weiteren dazu, auch zu verhindern, daß im Dampfdruckkochtopf ein Druck aufgebaut werden kann, wenn Deckel und Topf nicht richtig verschlossen sind. Als Sicherung dient ein Sicherungsstift, der in den Bajonettverschluß von Deckel und Topf einschiebbar ist, so daß in dieser Stellung ein Verdrehen von Deckel und Topf nicht mehr möglich ist.

Aus der DE-A·1 779 501 ist es bekannt, den Drehknopf für die Einstellung der Vorspannung für das Sicherheits- und Kochventil und damit für die einzelnen Kochstufen zu verlängern und das verlängerte Ende bei seiner Drehbewegung in die Kochstufe mit einem Sicherungsstift zusammenwirken zu lassen, der entgegen einer Federkraft nach unten verschoben wird und somit ein Sperren bzw. ein Freigeben von Topf und Deckel bewirkt. Es handelt sich hier um eine Einknopf-Automatik, bei der somit nur in der Entlüftungsstellung des Sicherheitsventils der Sicherungsstift die Öffnungsdrehung für den Deckel auf dem Topf freigeben kann.

Auch ist hierdurch gewährleistet, daß das Sicherheitsventil nur dann geschlossen werden kann, wenn der Dampfdruckkochtopf mit seinem Bajonettverschluß ordnungsgemäß geschlossen wurde, d. h. wenn die Aussparung im Topfrand zur Aufnahme des Sicherheitsstiftes genau unter diesem liegt. Diese bekannte Lösung bietet somit Sicherheiten gegen unbeabsichtigtes Öffnen und Schließen des Dampfdruckkochtopfes, jedoch ist diese Einknopf-Automatik sehr aufwendig und damit zum einen teuer in der Herstellung und zum anderen anfällig beim Betrieb, so daß hier Funktionsstörungen auf die Dauer nicht auszuschließen sind.

Aus der DE-A-3 223 142 ist ein Dampfdruckkochtopf gemäß dem Oberbegriff des Anspruchs 1 bekannt, in dessen Deckel eine Sicherheitseinrichtung angeordnet ist, wobei ein Öffnung des Topfes so lange nicht möglich ist, wie der Topfinnenraum nicht entlüftet ist. Die Entlüftungsvorrichtung der Sicherheitseinrichtung ist mit dem üblicher weise an solchen Dampfdruckkochtöpfen vorhandenen Überdruck-Sicherheitsventil kombiniert, in dem das Gegenlager für die Sicherheitsventildruckfeder mittels eines Betätigungsorganes der Sicherheitseinrichtung willkürlich beweglich ausgebildet ist. Zum Entlüften des Topfinnenraumes wird das Gegenlager der Sicherheitsventildruckfeder soweit verstellt, daß die Druckfeder ohne Vorspannung ist und das Sicherheitsventil als beim Überdruck im Topfinneren ansprechendes Entlüftungsventil wirkt.

Aus der US-A 2 594 584 ist ein Dampfdruckkochtopf bekannt, bei dem am Überdruckventil eine handbetätigte Betätigungseinrichtung angreift, mit der der Ventilsitz zwangsweise angehoben werden kann, so daß eine Entlüftung des Innenraumes vor dem Öffnen des Dampfdruckkochtopfes vorgenommen werden kann.

Der Erfindung liegt die Aufgabe zugrunde, einen Dampfdruckkochtopf der eingangs genannten Art mit einem Koch- und Sicherheitsventil und einer Verriegelungseinrichtung vorzuschlagen, bei dem mit einem Betätigungsknopf das Abdampfen und Entriegeln bzw. das Verschließen des Koch- und Sicherheitsventils und das Verriegeln erfolgt, wobei sichergestellt ist, daß im Topf kein Restdruck verbleiben kann und der vor allem einfach im Aufbau und damit kostengünstig in der Herstellung und des weiteren auch betriebssicher auf Dauer ist. Eine weitere Aufgabe besteht darin, ein Abnehmen des Sicherheitsventils erst dann zu ermöglichen, wenn der Deckel vom Topf abgenommen ist.

Diese Aufgabenstellung wird mit den Merkmalen des Anspruches 1 gelöst.

Besondere Ausführungsarten der Erfindung sind in den abhängigen Ansprüchen 2-11 angegeben.

Bei einem erfindungsgemäßen Dampfdruckkochtopf ist somit der Sicherungstift, der das Verriegeln von Topf und Deckel bewirkt, mit einem Betätigungsglied verbunden, das unmittelbar am Ventil eingreift und beim Verschieben der Verriegelungseinrichtung in die Schließstellung das Ventil entgegen der Federspannung von seinem Ventilsitz abhebt, so daß eine zwangsweise Entlüftung des Dampfdruckkochtopfes eintritt.

Da das Ventil vom Ventilsitz abgehoben ist, ist auch sichergestellt, daß kein Restdruck im Dampfdruckkochtopf verbleiben kann. Andererseits ist hierdurch auch sichergestellt, daß ein Druck im Dampfdruckkochtopf erst dann aufgebaut werden kann, wenn Deckel und Topf miteinander verschlossen sind und die Verriegelungseinrichtung in die Sperrstellung verschoben ist.

Das mit der Verriegelungseinrichtung verbundene Betätigungsglied für das Ventil besteht entweder aus einer Wippe oder aber aus einem Schieber und besteht im einfachsten Fall aus einem U-förmig gebogenen Blechstreifen mit einem längeren und einem kürzeren Schenkel. Der kürzere Schenkel dient zur Verriegelung von Topf und Deckel, während der längere Schenkel in eine Aufnahme des Ventils eingreift. Diese Aufnahme besteht aus, ggf. seitlich am Ventil angebrachten Schlitzen. Sofern das Betätigungsglied als Schieber ausgebildet ist, ist das Ende des längeren Schenkels mit einer Abbiegung oder Abkröpfung oder ähnlichem versehen, so daß beim Verschieben des Betätigungsgliedes in etwa senkrecht zur Ventilverschieberichtung zwangsweise dieses angehoben oder abgesenkt wird, je nachdem ob entlüftet oder aber Druck aufgebaut werden soll. Der kürzere Schenkel greift in das Bajonett zwischen Topf und Deckel ein und wird zusammen mit dem anderen Schenkel verschoben, so daß einerseits beim Entlüften eine Freigabe und andererseits vor dem Druckaufbau und Absenken des Ventils eine Verriegelung von Topf und Deckel erfolgt.

Zur Verschiebung des Betätigungsgliedes ist an diesem eine Lasche ausgebildet, die mit einem Stellknopf zusammenwirkt, der das Betätigungsglied entsprechend verschiebt. Sofern das Betätigungsglied als Wippe ausgebildet ist, wird bei Betätigung des Stellknopfes der kürzere Schenkel abgesenkt, so daß dieser außer Eingriff mit dem Bajonett des Topfes und des Deckels gelangt, während das vordere Ende des längeren Schenkels, das in der Aufnahme des Ventils liegt, angehoben wird, wobei der Schwenkpunkt im oberen Schenkel mit Abstand zur Aufnahme des Ventils liegt.

Gemäß einem weiteren Vorschlag der Erfindung kann die Absenkung auch mittels eines Drehknopfes erfolgen, der mit einem Schraubgewinde versehen ist, wobei die Lasche des Betätigungsgliedes in die Gewindegänge des Schraubgliedes eingreift. Vorteilhaft ist dann die Lasche zweigeteilt, so daß diese zu beiden Seiten des Schraubgewindes in dieses eingreift.

Auf dem längeren Schenkel des Betätigungsgliedes ist des weiteren eine Nase angeordnet, die auf der dem Deckel abgewandten Seite liegt und mit dem Drehknopf für die Einstellung der Federvorspannung des Ventils, d. h. mit dem Drehknopf für die Einstellung der Kochstufen zusammenwirkt. Hierzu ist in dem Drehknopf eine Nut ausgebildet, in die die Nase des Betätigungsgliedes dann eingreift, wenn sich dieses in der Schließstellung befindet. Hierdurch ist die Drehung des Drehknopfes begrenzt, d. h. dieser kann nur noch im Bereich der Kochstufen verdreht werden, wobei sichergestellt ist, daß ein unbeabsichtigtes Abdrehen des Drehknopfes in der Kochstellung, was zur Folge hätte, daß der Dampf explosionsartig aus dem Topf entweichen könnte, verhindert ist.

Gemäß einem weiteren Vorschlag der Erfindung ist der kürzere Schenkel der Wippe so geformt, daß dieser in der Kochstellung die Sperrsicherung ausübt, jedoch in der Abblasstellung bereits an der Geschirrwandung anliegt, so daß durch diese Geschirrwandung ein Weiterverschwenken der Wippe verhindert ist. Die an der Wippe angeformte Nase greift dann noch in die im Drehknopf ausgebildete Nut ein, so daß verhindert ist, daß der Drehknopf und damit das Ventil vom Deckel abgenommen werden kann, wenn der Deckel noch auf dem Topf befestigt ist. Hierdurch wird ein unbeabsichtigtes Lösen des Ventils vom Topf verhindert.

Vorteilhafterweise kann der Betätigungsknopf eingespart werden, wobei der Drehknopf für die Halterung des Ventils die Aufgabe des Betätigungsknopfes übernimmt. Zu diesem Zweck ist im Drehknopf eine Steuernut angeordnet, in die die an der Wippe angeformte Nase eingreift. Bei einer Drehung des Drehknopfes wird der Abstand der Nase zur Drehachse des Drehknopfes verändert, wobei die Wippe angehoben oder abgesenkt wird, je nachdem ob bei der Abblasstellung in die Kochstellung oder umgekehrt umgeschaltet werden soll. Der kürzere Schenkel der Wippe ist hier vorteilhaft gleichermaßen so ausgebildet, daß dieser in der Abblasstellung an der Topfaußenwandung anliegt und somit ein weiteres Verdrehen des Drehknopfes verhindert, wodurch sichergestellt ist, daß ein unbeabsichtigtes Lösen des Ventils verhindert ist. Erst wenn der Deckel vom Topf abgenommen ist, kann der Drehknopf weiter verdreht werden, und zwar in die Stellung, in der dieser vom Ventilsitz abgenommen werden kann. Die Verbindung von Drehknopf und Ventilsitz erfolgt vorteilhaft durch eine Bajonettverbindung, wobei diese so am Ventilsitz und am Drehknopf angeformt ist, daß ein Abnehmen vom Drehknopf vom Ventilsitz nur in der Lösestellung möglich ist.

Ein Ausführungsbeispiel der Erfindung ist im folgenden anhand der Zeichnung näher beschrieben, in dieser zeigen :

Fig. 1 einen Längsschnitt durch einen Teil eines Dampfdruckkochtopfes mit einem Koch- und Si-cherheitsventil und einer Verriegelungseinrich-tung,

Fig. 2 einen Schnitt nach Linie II-II in Fig. 1,

Fig. 3 einen Schnitt nach Linie III-III in Fig. 1,

Fig. 4 eine Ansicht des Ventilkörpers des Koch-und Sicherheitsventils,

Fig. 5 ein weiteres Ausführungsbeispiel gemäß der Erfindung, bei dem das Betätigungsglied, ebenso wie in Fig. 1, als Wippe ausgebildet ist,

Fig. 6 ein weiteres Ausführungsbeispiel der Erfindung mit einem als Schieber ausgebildeten Betätigungsglied,

Fig. 7 eine Unteransicht des Drehknopfes,

Fig. 8 zwei weitere Ausführungsbeispiele und 9 gemäß der Erfindung,

Fig.10 eine Stirnansicht des Betätigungsgliedes in Fig. 9,

Fig.11 ein weiteres Ausführungsbeispiel gemäß der Erfindung, bei dem der Drehknopf die Funktion des Betätigungsknopfes übernimmt,

Fig.12 einen Schnitt nach Linie XII-XII in Fig.11,

Fig.13 eine Draufsicht auf den Ventilkörper 6 bei abgenommenem Drehknopf,

Fig.14 eine Ansicht des Drehknopfes des Ausführungsbeispiels nach Fig.11 von unten und

Fig.15 den im Deckel eingebauten Ventilkörper.

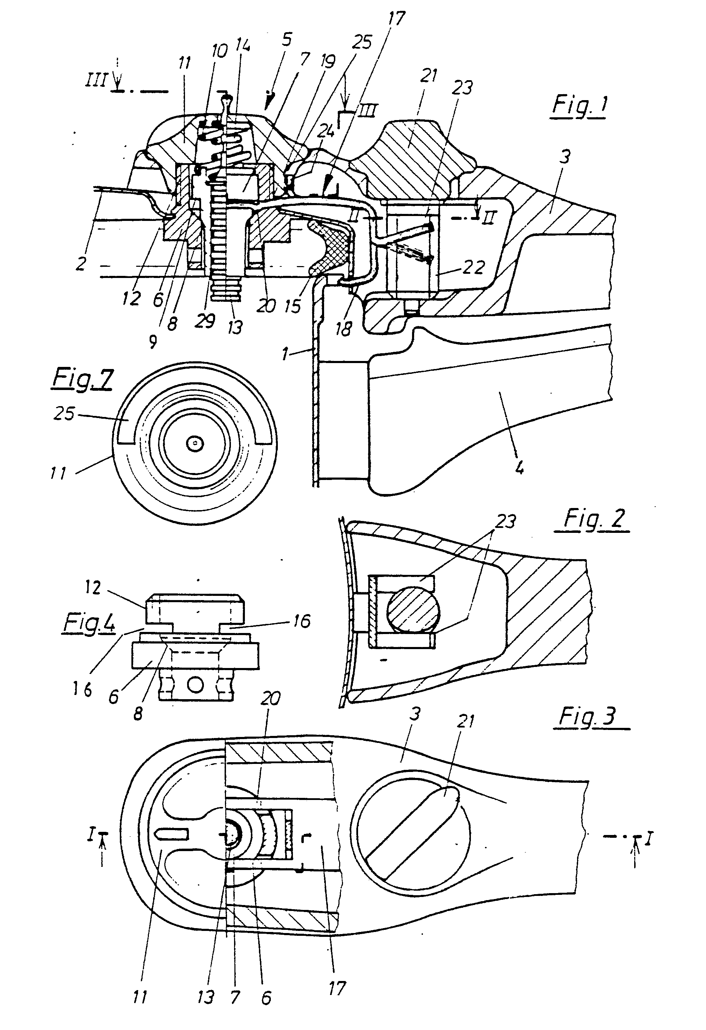

Der in Fig. 1 dargestellte Dampfdruckkochtopf besteht aus einem Topf 1 und einem Deckel 2. Am Topf 1 ist ein Griffteil 4 und am Deckel 2 ein Griffteil 3 angebracht. Die Schließstellung von Deckel 2 und Topf 1 wird erreicht, wenn beide Griffteile 4, 3 übereinander liegen.

Im Deckel 2 ist ein Koch- und Sicherheitsventil 5 eingesetzt.

Das Sicherheitsventil 5 besteht aus einem Ventilkörper 6 und einem in diesem verschiebbar angeordneten Ventil 7. In der gezeigten Stellung liegt das Ventil 7 am Sitz 8 des Ventilkörpers an, so daß kein Dampf aus dem Inneren des Dampfdruckkochtopfes entweichen kann. In dieser Stellung wird das Ventil 7 durch eine Feder 10 gepreßt gehalten, wobei die Federvorspannung durch einen Drehknopf 11 eingestellt wird, der auf einem Außengewinde 12 des Ventilkörpers 6 aufgeschraubt ist.

Das Ventil 7 ist mit einer Bohrung 29 versehen, in der ein Druckanzeiger 13 entgegen einer Feder 14 verschiebbar angeordnet ist. Bei einem Druckaufbau im Inneren des Dampfdruckkochtopfes wird der Druckanzeiger 13 angehoben und tritt aus dem Drehknopf 11 heraus, wobei durch Ringe am Druckanzeiger die Größe des Druckes im Dampfdruckkochtopf angezeigt wird.

In den Rand des Deckels 2 ist in bekannter Art und Weise eine Dichtung 15 eingesetzt, die Topf und Deckel gegeneinander abdichtet.

Im Ventilkörper 6 ist eine Ausnehmung in Form von paarweise liegenden Schlitzen 16 angeordnet, durch die die längeren Schenkel 19 eines Betätigungsgliedes 17 greifen, die auf eine Schulter 9 des Ventilkegels 7 einwirken. Das Betätigungsglied ist in Seitenansicht U-förmig ausgebildet, mit einem kürzeren Schenkel 18 und einem längeren Schenkel 19. Der kürzere Schenkel 18 dient zugleich als Verriegelungseinrichtung und greift in den bajonettartigen Verschluß zwischen Topf 1 und Deckel 2. Hierdurch wird in bekannter Art und Weise ein Verdrehen von Deckel und Topf verhindert.

Das Betätigungsglied 17 ist als Wippe ausgebildet, wobei dieses mit seinem längeren Schenkel 19 um einen Punkt 20 schwenkt. Zur Verschwenkung des Betätigungsgliedes 17 dient ein Betätigungsknopf 21, der im Ausführungsbeispiel nach Fig. 1 als Drehknopf ausgebildet und im oberen Griffteil 3 angeordnet ist. Der Betätigungsknopf 21 hat ein Schraubgewinde 22, in dessen Gewindegänge eine Lasche 23 eingreift, die mit dem Betätigungsglied 17 verbunden ist. Die Lasche 23 ist hälftig aufgeteilt und greift zu beiden Seiten in die Gewindegänge des Schraubgewindes 22 ein. Beim Drehen des Betätigungsknopfes 21 wird die Lasche 23 und damit das Betätigungsglied 17 um den Schwenkpunkt 20 verschwenkt, wobei bei einer Bewegung der Lasche nach unten das Ventil 7 von seinem Sitz 8 angehoben und die Verriegelungseinrichtung 18 außer Eingriff mit dem Bajonett von Topf und Deckel gebracht wird. Umgekehrt wird beim Anheben der Lasche 23 eine Verriegelung von Topf und Deckel und ein Absenken des Ventils 7 auf seinen Sitz 8 erreicht. Die Schulter 9 im Ventil 7 ist dabei so groß gewählt, daß bei abgesenktem Ventil dieses normal als Koch- und Sicherheitsventil arbeiten kann.

Am längeren Schenkel 19 des Betätigungsgliedes 17 ist eine Nase 24 angeordnet, die zusammen mit dem Betätigungsglied verschoben bzw. verschwenkt wird. Diese Nase wirkt mit einer Nut 25 im Drehknopf 11 zusammen, wobei die Nut 25 über weniger als 360° im Drehknopf angeordnet ist. Hierdurch ist sichergestellt, daß der Drehknopf 11 bei geschlossenem Ventil 7 und verriegeltem Topf und Deckel nur um einen bestimmten Winkelbetrag gedreht werden kann, der zur Änderung der Vorspannung der Feder 10 und damit der Einstellung der einzelnen Kochstufen dient. Andererseits ist hierdurch verhindert, daß der Drehknopf 11 ganz abgedreht werden kann und daß dann bei einem Überdruck im Dampfdruckkochtopf das Ventil 7 nach oben weggeschleudert wird.

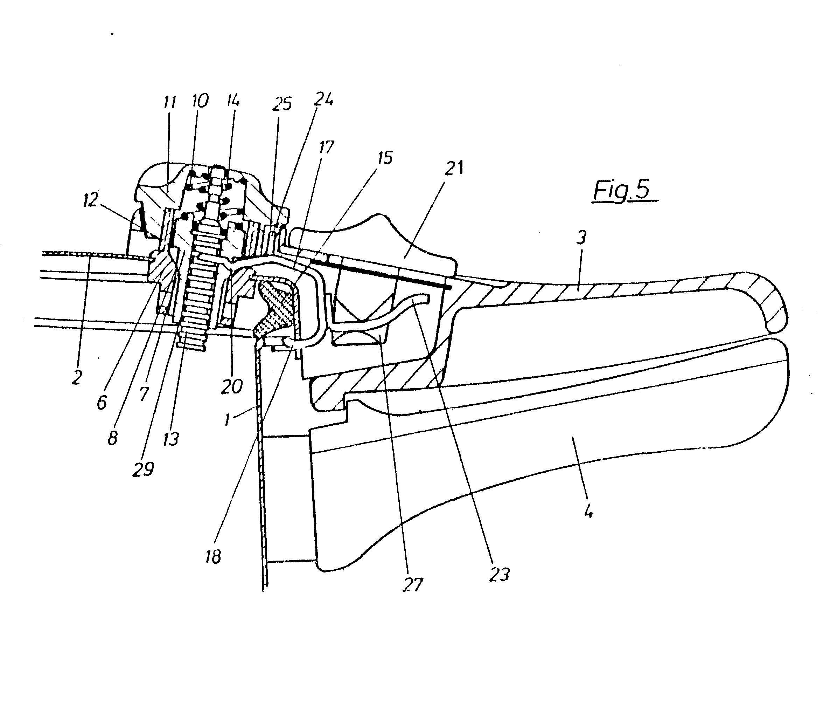

Das Betätigungsglied 17, das mit der Verriegelungseinrichtung 18 eine Einheit bildet, besteht somit aus einem U-förmig gebogenen Blech und ist kostengünstig herzustellen. Darüberhinaus ist hierdurch eine zwangsweise Koppelung von Ventilstellung und Verriegelung gegeben, wobei die Betätigung durch einen Drehknopf, wie ihn Fig. 1 und 3 zeigen, oder aber durch einen Schiebeknopf 26, wie ihn Fig. 5 zeigt, bewirkt wird. Bei dem Ausführungsbeispiel nach Fig. 1 wie auch nach dem nach Fig. 5 ist das Betätigungsglied 17 als Wippe ausgebildet. Vergleicht man einen erfindungsgemäßen Dampfdruckkochtopf mit seiner Sicherheitseinrichtung mit den bekannten Druckkochtöpfen mit ihren äußerst komplizierten und störanfälligen Sicherheitseinrichtungen, so zeigt sich, daß dieser bei gleichen Funktionen, wobei im Gegensatz zu den bekannten auch noch sichergestellt ist, daß eine Restentlüftung des Dampfdruckkochtopfes durch ein Anheben des Ventils sichergestellt ist, wesentlich einfacher ausgebildet ist.

Bei dem Ausführungsbeispiel nach Fig. 5 sind gleiche Teile mit gleichen Bezugszeichen versehen. Auch bei diesem Ausführungsbeispiel handelt es sich bei dem Betätigungsglied um eine Wippe, die um einen Punkt 20 schwenkt. Die mit dem Betätigungsglied 17 verbundene Lasche 23 ist leicht bogenförmig ausgebildet und greift durch eine Führung 27 im Betätigungsknopf 21. Die Krümmung der Lasche ist der Richtung des Verschiebeweges des Betätigungsknopfes 21 derart angepaßt, daß bei einem Verschieben des Betätigungsknopfes, in der Zeichnung nach rechts, eine Absenkung der Lasche und damit eine Freigabe der Verriegelungseinrichtung 18 und ein Anheben des Ventils 7 erfolgt. Bei einem Verschieben des Betätigungsknopfes 21 in der entgegengesetzten Richtung wird das Ventil wieder auf seinen Ventilsitz 8 abgesenkt und die Verriegelungsvorrichtung 18 greift in den Bajonettverschluß von Deckel und Topf ein, so daß ein Verdrehen von Deckel und Topf nicht möglich ist. Andererseits kann das Betätigungsglied 17 nur dann nach vorn verschoben werden, wenn Topf und Deckel richtig übereinanderliegen, d. h. auch richtig verschlossen sind, ansonsten würde die Verriegelungseinrichtung 18 des Betätigungsgliedes 17 gegen einen vorstehenden Teil des Bajonettverschlusses anstoßen. Die Folge wäre, daß das Ventil 7 nicht abgesenkt wird und somit kein Druck im Dampfdruckkochtopf aufgebaut werden kann.

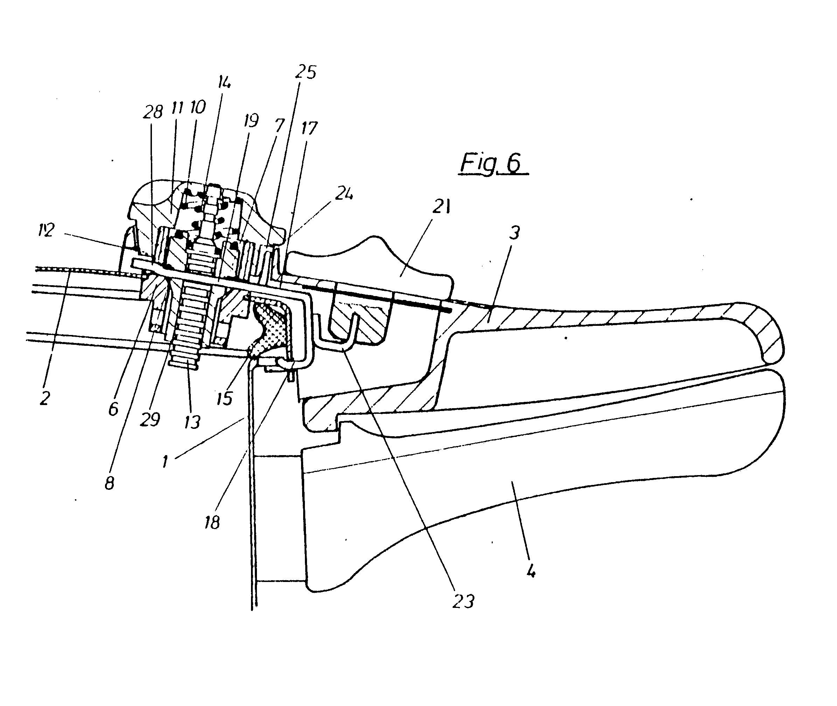

Bei dem in Fig. 6 dargestellten Ausführungsbeispiel sind gleiche Teile mit gleichen Bezugszeichen versehen. Dieses Ausführungsbeispiel unterscheidet sich von den beiden vorangegangenen dadurch, daß das Betätigungsglied 17 als Schieber ausgebildet ist. Die Verschiebung des Betätigungsgliedes 17 erfolgt durch einen Betätigungsknopf 21, in den die Lasche 23 formschlüssig eingreift. Das vordere Ende des längeren Schenkels 19 ist mit einer Abkröpfung 28 versehen. Die in Fig. 6 gezeigte Stellung ist die Kochstellung, d. h. das Ventil 7 ist auf seinen Ventilsitz 8 abgesenkt und die Verriegelungseinrichtung 18 sperrt Topf und Deckel gegen ein Verdrehen. Soll der Topf geöffnet werden, so wird der Betätigungsknopf 21 aus der gezeichneten Stellung nach rechts verschoben, wobei die Abkröpfung 28 unter die ringförmige Schulter 9 des Ventils greift, wodurch dieses von seinem Sitz 8 abgehoben wird und der Druck im Topf vollständig abgebaut wird. Gleichzeitig hat die Verriegelungseinrichtung Topf und Deckel freigegeben, so daß anschließend der Topf gefahrlos geöffnet werden kann.

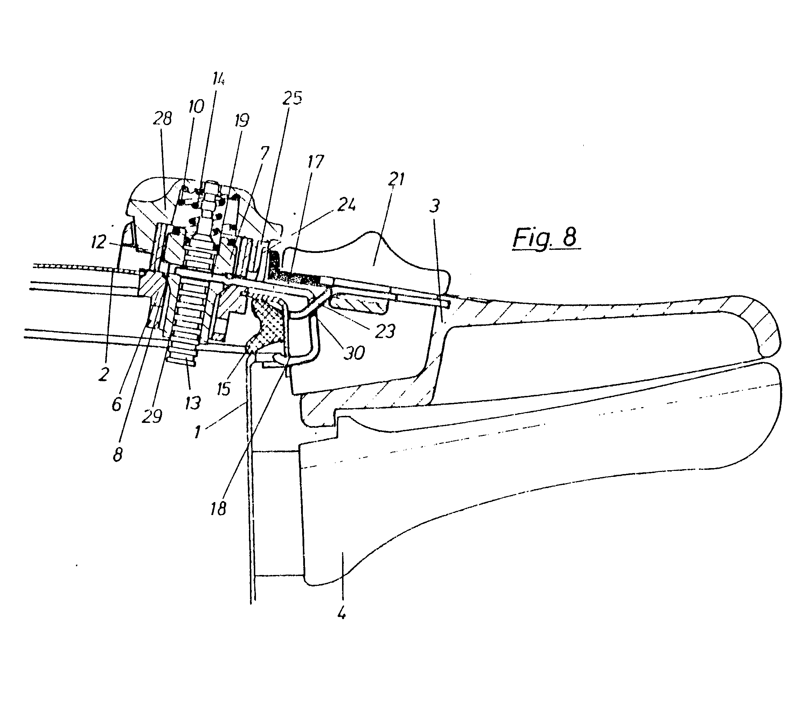

Bei dem in Fig. 8 dargestellten Ausführungsbeispiel sind gleiche Teile mit gleichen Bezugszeichen versehen. Bei diesem Ausführungsbeispiel ist das Betätigungsglied 17 gleichfalls als Wippe ausgebildet. Der Unterschied zu dem Ausführungsbeispiel nach Fig. 5 besteht im wesentlichen darin, daß die Lasche 23 fest mit dem Betätigungsknopf 21 verbunden ist und in eine im Betätigungsglied 17 ausgebildete Führung 30 eingreift. Die Form dieser Führung sowie die Form der Lasche 23 sind aufeinander abgestimmt, so daß beim Zurückschieben des Betätigungsknopfes 21 in Fig. 8 nach rechts ein Absenken des kürzeren Schenkels 18 und ein Anheben des längeren Schenkels 19 erfolgt, wodurch zum einen Deckel und Topf entriegelt werden und zum anderen das Ventil 7 auf seinem Sitz 8 angehoben wird.

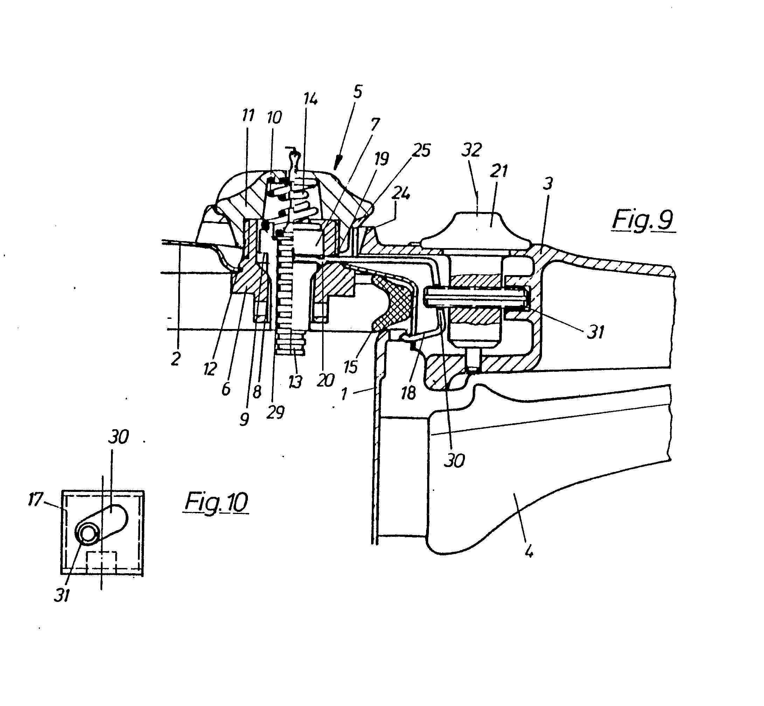

Bei dem Ausführungsbeispiel nach den Fig. 9 und 10 sind gleiche Teile mit gleichen Bezugszeichen versehen. Das Betätigungsglied 17 ist gleichfalls als Wippe ausgebildet und schwenkt um den Schwenkpunkt 20. Zur Verschwenkung des Betätigungsgliedes 17 dient ein Betätigungsknopf 21, der als Drehknopf ausgebildet ist und im Griffteil 3 um eine lotrecht liegende Achse 32 drehbar ist. Senkrecht zur Achse 32 ist im Betätigungsknopf 21 eine Spannbuchse 31 angeordnet, die in eine Führung 30 im Betätigungsglied 17 eingreift. Die Führung 30 liegt schräg zur Bewegungsrichtung der Spannbuchse 31, so daß bei einer Verdrehung des Betätigungsknopfes 21 das Betätigungsglied 17 angehoben bzw. abgesenkt wird, mit dem Erfolg, daß der Topf entweder verriegelt und das Ventil 7 freigegeben wird, oder aber der Topf entriegelt und das Ventil 7 von seinem Sitz 8 abgehoben wird.

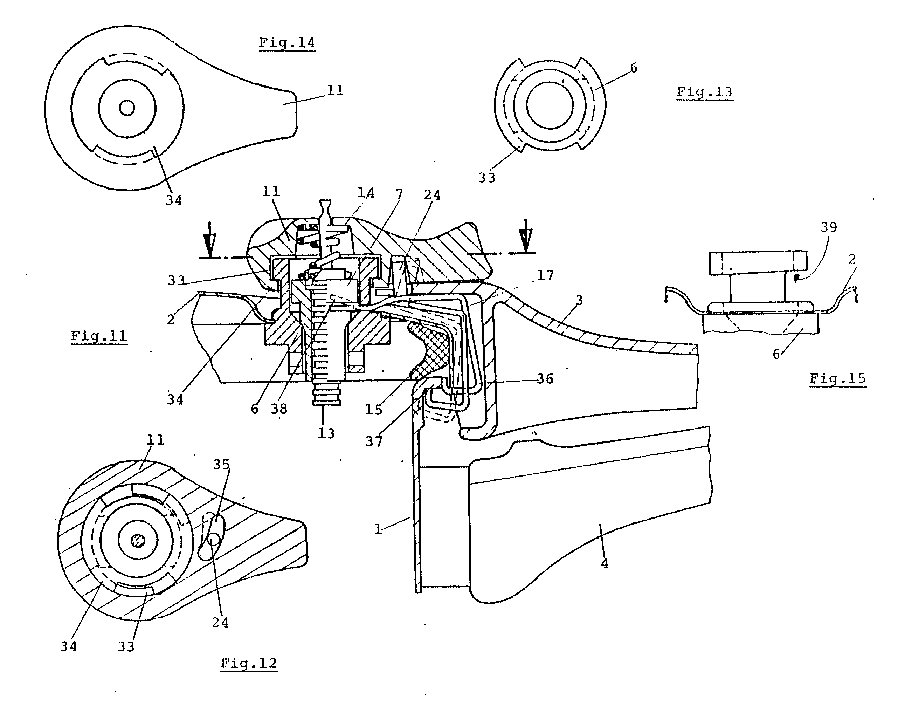

Bei den Ausführungsbeispielen nach den Fig. 11 bis 14 sind gleiche Teile mit gleichen Bezugszeichen versehen. Der Unterschied zu den vorstehenden Ausführungsbeispielen besteht darin, daß der Betätigungsknopf 21 eingespart worden ist und die Funktion des Betätigungsknopfes vom Drehknopf 11 mit übernommen wird. Ein weiterer Unterschied besteht darin, daß die Befestigung des Drehknopfes 11 am Ventilkörper 6 nicht über ein Schraubgewinde, sondern über einen Bajonettverschluß 33, 34 erfolgt, wobei die Befestigungsstellung sowie die Lösestellung so zueinander angeordnet sind, daß eine Verdrehung des Drehknopfes 11 in der Verriegelungs- wie auch Abdampfstellung ohne weiteres möglich ist, ohne daß eine Gefahr des Lösens von Drehknopf 11 und Ventilkörper 6 besteht. Darüberhinaus kann eine weitere Verdrehung des Drehknopfes 11 in der Verriegelungsstellung gegeben sein, und zwar dann, wenn mit dem gleichen Drehknopf auch unterschiedliche Kochstellungen eingestellt werden sollen. In diesem Fall sind am Ventilkörper Kurvenbahnen (39) ausgebildet, die bei einer Verdrehung eine Spannung bzw. Entspannung der Feder 14 gestatten.

Die Nase 24 des Betätigungsgliedes 17 greift in eine Führungsnut 35 ein, die so im Drehknopf 11 ausgebildet ist, daß der Abstand der Nase 24 zum Drehpunkt des Drehknopfes 11 bei der Drehung verändert wird. Hierdurch wird eine Verschwenkung des Betätigungsgliedes 17 erhalten, wie dies mit zwei ausgezogenen Stellungen sowie einer gestrichelten Stellung in Fig. 11 dargestellt ist. Die Kochstellung gibt die oberste ausgezeichnete Stellung des Betätigungsgliedes 17 wieder. Hier greift das Ende 36 des Betätigungsgliedes 17 am Rand des Topfes 1 an, so daß Topf 1 und Deckel 2 gegeneinander verriegelt sind. Soll der Kochvorgang beendet werden, so wird der Betätigungsknopf 11 derart verdreht, daß das Ende 36 unter den Rand 37 des Topfes 1 greift. Gleichzeitig wird das vordere Ende 38 des Betätigungsgliedes 17 angehoben, wodurch das Ventil 7 von seinem Ventilsitz abgehoben wird und der Abblasvorgang eingeleitet wird. Ein Weiterdrehen des Drehknopfes 11 in eine Stellung, in der das Ventil 7 herausgenommen werden kann, ist nicht möglich, da das Ende 36 ein Weiterdrehen verhindert. Erst bei drucklosem Zustand, wenn der Deckel 2 vom Topf 1 abgenommen worden ist, kann der Drehknopf weitergedreht werden, so daß das Ende 36 des Betätigungsgliedes 17 die gestrichelt gezeichnete Lage einnehmen kann. In dieser Stellung kann der Bajonettverschluß zwischen Ventilkörper 6 und Drehknopf 11 gelöst werden und das Ventil zur Reinigung ausgebaut werden.

Diese zusätzliche Funktion der Sperre für den Ausbau des Ventils bei auf dem Topf montiertem Deckel ist gleichermaßen bei den Ausführungsbeispielen mit einem gesonderten Betätigungsknopf 21 möglich. Hier ist lediglich dafür Sorge zu tragen, daß die Nase 24 erst dann aus der Nut 25 des Drehknopfes 11 herauskommt, wenn Deckel und Topf getrennt sind.

**Patentansprüche**

1. Dampfdruckkochtopf, bei dem Topf (1) und Deckel (2) durch einen bajonettartigen oder ähnlichen Verschluß miteinander verbunden sind, mit einem im Deckel (2) angeordneten Koch- und Sicherheitsventil (5), bestehend aus einem mit dem Deckel verbundenen Ventilkörper (6) und einem mittels einer Feder (14) gegen einen Ventilsitz (8) gepreßt gehaltenen Ventil (5) und mit einer Verriegelungseinrichtung (18), die ein Drehen von Deckel (2) und Topf (1) und somit ein Öffnen desselben erst dann gestattet, wenn der Druck im Topf (1) abgebaut ist, wobei die Verriegelungseinrichtung (18) mit dem Ventil (5) über ein starr mit der Verriegelungseinrichtung (18) verbundenes Betätigungsglied (17) miteinander verbunden ist, so daß bei einer Entriegelung von Deckel (2) und Topf (1) der Überdruck im Topf (1) abgebaut wird, dadurch gekennzeichnet, daß die Verriegelungseinrichtung (18) eine unmittelbare Verriegelung von Deckel (2) und Topf (1) durch Eingriff in den Bajonettverschluß bewirkt, daß der Ventilkörper (6) mit einem oder mehreren Schlitzen (16) versehen ist, durch den bzw. die das Betätigungsglied (17) greift, das unmittelbar am Ventilkegel (7) angreift und so bei einer Entriegelung von Deckel (2) und Topf (1) zwangsweise den Ventilkegel (7) von seinem Sitz entgegen der Federspannung abhebt und bei der Verriegelung des Deckels den Ventilkegel (7) auf seinem Sitz absetzt, und daß das Betätigungsglied (17) im wesentlichen U-förmig ausgebildet ist und als Schenkel einen kürzeren Schenkel (18) der die Verriegelungseinrichtung bildet, und einem längeren Schenkel (19), aufweist der mit dem Ventilkegel (7) zusammenwirkt.

2. Dampfdruckkochtopf nach Anspruch 1, dadurch gekennzeichnet, daß die Schlitze (16) am Ventilkörper (6) seitlich angeordnet sind und oberhalb des Ventilsitzes (8) liegen.

3. Dampfdruckkochtopf nach Anspruch 2, dadurch gekennzeichnet, daß das Betätigungsglied (17) als Wippe ausgebildet ist und daß der Drehpunkt (20) der Wippe im Bereich des längeren Schenkels (19) liegt.

4. Dampfdruckkochtopf nach Anspruch 3, dadurch gekennzeichnet, daß stirnseitig am Betätigungsglied (17) eine Buchse (31) oder Lasche (23) angreift, die mittels eines Betätigungsknopfes (21) verschiebbar ist.

5. Dampfdruckkochtopf nach Anspruch 4, dadurch gekennzeichnet, daß der Betätigungsknopf (21) als Schieber ausgebildet ist und die Lasche (23) in eine im Betätigungsknopf (21) oder in eine im Betätigungsglied (17) ausgebildete Führung (27, 30) eingreift.

6. Dampfdruckkochtopf nach Anspruch 4, dadurch gekennzeichnet, daß der Betätigungsknopf (21) als Drehknopf mit einem Schraubgewinde (22) ausgebildet ist, in dessen Gewindegänge die Lasche (23) eingreift.

7. Dampfdruckkochtopf nach Anspruch 6, dadurch gekennzeichnet, daß die Lasche (23) hälftig geteilt und auf gegenüberliegenden Seiten in das Gewinde (22) des Drehknopfes eingreift.

8. Dampfdruckkochtopf nach Anspruch 4, dadurch gekennzeichnet, daß der Betätigungsknopf (21) als Drehknopf ausgebildet ist daß die Buchse (31) im Drehknopf senkrecht zu dessen Drehachse angeordnet ist und in eine schräg liegende Führung (30) im Betätigungsglied (17) eingreift.

9. Dampfdruckkochtopf nach Anspruch 2, dadurch gekennzeichnet, daß das Betätigungsglied (17) als Schieber ausgebildet ist und daß das vordere Ende des längeren, mit dem Ventil zusammenwirkenden Schenkels mit einer Abkröpfung, Verstärkung o. ä. versehen ist, die beim Verschieben des Betätigungsgliedes (17) mit der Schulter (9) des Ventilkegels (7) des Ventils derart zusammenwirkt, daß dieses angehoben bzw. abgesenkt wird.

10. Dampfdruckkochtopf nach Anspruch 9, dadurch gekennzeichnet, daß an einer Lasche (23) des Betätigungsgliedes (17) ein Betätigungsknopf (21) angreift, der unmittelbar oder über Exzenter die Verschiebung des Betätigungsgliedes (17) bewirkt.

11. Dampfdruckkochtopf nach einem der Ansprüche 1 bis 10, dadurch gekennzeichnet, daß am Betätigungsglied eine Nase (24) angeordnet ist, die mit einer Aussparung (25) im Drehknopf (11) für die Feder des Koch- und Sicherungsventils derart zusammenwirkt, daß bei geschlossenem Ventil und damit verriegeltem Topf (1) und Deckel (2) die Federvorspannung nur im Bereich der Kochstufen verstellbar ist.

**Claims**

1. A pressure cooker, wherein the pan (1) and lid (2) are interconnected by a bayonet type or similar locking means, having a cooking and safety valve (5) disposed in the lid (2), comprising a valve body (6) connected to the lid and valve (5) held so as to press against the valve seat (8) by means of a spring (14) and having a locking device (18), which allows rotation of the lid (2) and pan (1) and therefore the opening thereof only when the pressure in the pan is reduced, the locking device (18) being connected to the valve (5) by means of an actuating member rigidly connected to the locking device (18), characterised in that the locking device (18) effects direct locking of the lid (2) and pan (1) by engaging in the bayonet lock, that the valve body (6) is provided with one or more slots (16), by means of which the actuating member (17) grips, which member engages directly on the valve cone (7) and thus when the lid (2) and pan (1) are unlocked forcibly lifts the valve cone (7) from its seat against spring tension and when the cover is locked sets the valve cone (7) down on its seat, and that the actuating member (17) is designed so as to be substantially U-shaped and as arms has a shorter arm (18) which forms the locking device, and a longer arm (19) which co-operates with the valve cone (7).

2. A pressure cooker according to claim 1, characterised in that the slots (16) are arranged laterally on the valve body (6) and lie above the valve seat.

3. A pressure cooker according to claim 2, characterised in that the actuating member (17) is designed as a rocker and that the point of rotation (20) lies in the region of the long arm (19).

4. A pressure cooker according to claim 3, characterised in that on the end face of the actuating member (17) a sleeve (31) or strap (23) engages, which is displaceable by means of an actuating button (21).

5. A pressure cooker according to claim 4, characterised in that the actuating button (21) is designed as a slider and the strap (23) engages in a guide formed in the actuating button (21) or in the actuating member (17).

6. A pressure cooker according to claim 4, characterised in that the actuating button (21) is formed as a rotary button with a screw thread (22), in whose thread the strap (23) engages.

7. A pressure cooker according to claim 6, characterised in that the strap (23) is divided in half and engages the thread (22) of the rotary button on opposite sides.

8. A pressure cooker according to claim 4, characterised in that the actuating head (21) is designed as a rotary button, that the sleeve (31) is arranged in the rotary button so as to be perpendicular to the axis of rotation thereof and engages in an oblique guide (30) in the actuating member (17).

9. A pressure cooker according to claim 2, characterised in that the actuating member (17) is designed as a slider and that the front end of the longer arm co-operating with the valve is provided with a bend, reinforcement or the like, which during displacement of the actuating member (17) co-operates with the shoulder (9) of the valve cone (7) of the valve in such a way that it is raised or lowered.

10. A pressure-cooker according to claim 9, characterised in that on a strap (23) of the actuating member (17) an actuating button (21) engages, which effects the displacement of the actuating member (17) directly or via cams.

11. A pressure cooker according to any one of claims 1 to 10, characterised in that on the actuating member a lug (24) is disposed, which co-operates with a recess (25) in the rotary button (11) for the springs of the cooking and safety valve in such a way that when the valve is closed and thus the pan (1) and cover (2) are locked, the pretensioning in the spring is only set in the range of the cooking stages.

**Revendications**

1. Autocuiseur, dans lequel la marmite (1) et son couvercle (2) sont reliés l'un à l'autre par une jonction du genre baïonnette ou analogue, comportant une soupape (5) de cuisson et de sécurité, disposée dans le couvercle (2), constituée d'un corps de soupape (6) lié au couvercle et d'une soupape (5) maintenue poussée contre un siège de soupape (8) au moyen d'un ressort (14), et un dispositif de verrouillage (18) qui ne permet la rotation du couvercle (2) et de la marmite (1), et ainsi son ouverture, que lorsque la pression s'est abaissée dans la marmite (1), ce dispositif de verrouillage (18) étant relié à la soupape (5) par l'intermédiaire d'un élément d'actionnement (17) rigidement lié au dispositif de verrouillage (18), de telle sorte que, lors du déverrouillage du couvercle (2) et de la marmite (1), la surpression a disparu dans la marmite (1), caractérisé en ce que le dispositif de verrouillage (18) produit le verrouillage direct du couvercle (2) et de la marmite (1) en pénétrant dans la jonction à baïonnette, en ce que le corps de soupape (6) est prévu avec une ou plusieurs fentes (16) au travers de laquelle ou desquelles passe l'élément d'actionnement (17) qui attaque directement le cône de soupape (7) et soulève ainsi à force le cône de soupape (7) de son siège en opposition à la force du ressort lors du déverrouillage du couvercle (2) et de la marmite (1) et pose le cône de soupape (7) sur son siège lors du verrouillage du couvercle, et en ce que l'élément d'actionnement (17) a essentiellement une forme en U, dont les branches comportent une branche courte (18) constituant le dispositif de verrouillage et une branche longue (19) coopérant avec le cône de soupape (7).

2. Autocuiseur selon la revendication 1, caractérisé en ce que les fentes (16) sont disposées latéralement dans le corps de soupape et situées au-dessus du siège de soupape (8).

3. Autocuiseur selon la revendication 2, caractérisé en ce que l'élément d'actionnement (17) est constitué sous la forme d'un levier basculant et en ce que le centre de rotation (20) du levier est situé dans la région de la branche longue (19).

4. Autocuiseur selon la revendication 3, caractérisé en ce qu'une douille (31) ou pène (23), déplaçable au moyen d'un bouton d'actionnement (21), agit, du côté frontal, sur l'élément d'actionnement (17).

5. Autocuiseur selon la revendication 4, caractérisé en ce que le bouton d'actionnement (21) est constitué sous la forme d'un coulisseau et en ce que le pène (23) passe dans un guidage (27, 30) formé dans le bouton d'actionnement (21) ou dans l'élément d'actionnemenь (17).

6. Autocuiseur selon la revendication 4, caractérisé en ce que le bouton d'actionnement (21) est constitué comme un bouton tournant, avec un filetage (22) dans les filets duquel s'engage le pène (23).

7. Autocuiseur selon la revendication 6, caractérisé en ce que le pène (23) est divisé en deux parties et s'insère en des côtés opposés dans le filetage (21) du bouton tournant.

8. Autocuiseur selon la revendication 4, caractérisé en ce que le bouton d'actionnement (21) est constitué comme un bouton tournant et en ce que la douille (31) est portée par le bouton perpendiculairement à son axe de rotation et s'engage dans un guidage (30) incliné de l'élément d'actionnement (17).

9. Autocuiseur selon la revendication 2, caractérisé en ce que l'élément d'actionnement est constitué sous la forme d'un coulisseau et en ce que l'extrémité avant de la branche longue, coopérant avec la soupape, présente un coude, épaississement ou analogue, qui coopère, lors du déplacement de l'organe d'actionnement (17), avec l'épaulement (9) du cône (7) de la soupape de telle façon que celle-ci soit soulevée ou abaissée.

10. Autocuiseur selon la revendication 9, caractérisé en ce qu'un bouton d'actionnement (21) agit sur un pène (23) de l'élément d'actionnement (17) pour produire le déplacement de ce dernier, directement ou par l'intermédiaire d'un excentrique.

11. Autocuiseur selon l'une des revendications 1 à 10, caractérisé en ce que l'élément d'actionnement porte un bec (24), qui coopère avec un évidement (25) prévu dans le bouton tournant (11) prévu pour le ressort de soupape de cuisson et de sécurité, de façon que, la soupape étant fermée et de ce fait la marmite (1) et le couvercle (2) étant verrouillés, la précontrainte du ressort ne puisse varier que dans le domaine des degrés de cuisson. .

*Fig. 1*

*Fig. 7*

*Fig. 4*

*Fig. 2*

*Fig. 3*

Fig.5

Fig. 6

0 148 464

*Fig. 8*

0 148 464

_Fig.9_

_Fig.10_

0 148 464

Fig.14

Fig.13

11

6

33

34

Fig.11

11   14   7   24

33

2

34

6  38

13

15

37

36

17

3

1

4

Fig.12

11

35

24

34   33

39

2

6

Fig.15

0 148 464